# EUROPEAN PATENT APPLICATION

(11) **EP 2 226 184 A1**
(43) Date of publication of application: **08.09.2010**
(21) Application number: 10154607.5
(22) Date of filing: 25.02.2010
(51) Int. Cl.: B29C 63/34, F16L 9/133, F16L 55/165

(54) **Pipe-lining material**

(30) Priority: 06.03.2009 JP 2009052784
(71) Applicant: SHONAN GOSEI - JUSHI SEISAKUSHO K.K., Hiratsuka-shi, Kanagawa-ken, 254-0807 (JP)
(72) Inventor: Kamiyama, Takao, Kanagawa-ken Kanagawa 254-0807 (JP); Kaneta, Koji, Kanagawa-ken Kanagawa 254-0807 (JP); Fujii, Kenji, Kanagawa-ken Kanagawa 254-0807 (JP)
(74) Representative: Kronthaler, Wolfgang N.K.

(57) **Abstract**

A pipe-lining material (1) comprises a tubular resin absorbent material (10) impregnated with a photo-curing resin or a thermosetting resin mixed therewith. A tubular shading film (12) is thermally fused and bonded to the external peripheral surface of the tubular resin absorbent material (10). In such a structure, the entire external peripheral surface of the tubular resin absorbent material (10) is covered with the shading film (12), preventing the photo-curing resin impregnated in the tubular resin absorbent material (10) from being accidentally exposed to and cured with external light, and the shading film from deviating in position relative to the tubular resin absorbent material. The shading film (12) can easily be obtained by adding a color pigment to a polyethylene film or other highly airtight plastic film when this plastic film is being produced. Therefore, the conventionally used coating step involving the use of a plastic film can be directly used to produce a pipe-lining material having high shading characteristics.

## Description

The present invention relates to a pipe-lining material that is inserted into a pipeline to rehabilitate an inner peripheral surface thereof.

Pipe-lining methods for lining and repairing sewer pipes or other pipelines without digging the pipeline out of the ground have been used in cases where the pipeline has deteriorated. In such pipe-lining methods, a pipe-lining material is everted and inserted into a pipeline using fluid pressure, or is inserted into the pipeline by drawing the material into the pipeline. The pipe-lining material comprises a soft tubular resin absorbent material impregnated with an uncured liquid curable resin with its exterior surface covered by a plastic film. The pipe-lining material is pressed against the inner wall of the pipeline, and the curable resin impregnated in the pipe-lining material is cured to line the inner wall of the pipeline.

A curable resin (thermosetting resin) with a thermal catalyst added, or a curable resin (photo-curing resin) with a photocatalyst added is used for the curable resin with which the tubular resin absorbent material is impregnated. In a case in which a photo-curing resin is used, the pipe-lining material is pressed against the inner wall of the pipeline and held in a circular shape, and an irradiation device (UV lamp, visible-light source, or the like) is moved inside the pipe-lining material to cure the photo-curing resin. In a case in which a thermosetting resin is used, hot water, hot air, or another heat medium is applied to the pipe-lining material in order to cure the thermosetting resin.

Japanese laid-open patent application 2003-33970 proposes that a tubular resin absorbent material may be impregnated with both a photo-curing resin and a thermosetting resin. After having been inserted into the pipeline, the photo-curing resin of such a pipe-lining material will be on the interior side. First, the photo-curing resin is cured by light irradiation, and the thermosetting resin is then cured by the heat generated when the photo-curing resin is cured.

In a case in which a pipe-lining material has a tubular resin absorbent material impregnated with a photo-curing resin, the photo-curing resin is liable to be cured if the pipe-lining material is exposed to external light. Therefore, the entire pipe-lining material is enveloped in a tubular shading film so that the pipe-lining material will not be exposed to light. The pipe-lining material is transported to a rehabilitation site and pulled inside a pipeline to be rehabilitated.

Since the shading film simply envelops the entire pipe-lining material, the position thereof deviates from the pipe-lining material, and the pipe-lining material mistakenly is exposed to external light.

In order to prevent this positional deviation, the shading film is thermally fused to the exterior surface of the pipe-lining material in order to shield the pipe-lining material from light. However, a tubular polyethylene or other plastic airtight film is normally heat-fused to the exterior surface of the tubular resin absorbent material, so that the production processes of the pipe-lining material would increase if a shading film is additionally provided thereon. Two layers of tubular airtight and shading films also would make the pipe-lining material uneconomical.

It is therefore an object of the present invention to provide a pipe-lining material having a simple construction and high shading characteristics.

According to an aspect of the present invention, there is provided a pipe-lining material that is inserted into a pipeline to rehabilitate an inner peripheral surface thereof, the pipe-lining material comprising:
a tubular resin absorbent material impregnated with a curable resin; and
a tubular shading film that is thermally fused and bonded to the exterior surface of the tubular resin absorbent material.

In the present invention, since a tubular shading film is thermally fused to the exterior surface of a tubular resin absorbent material impregnated with a photo-curing resin, the shading film does not deviate in position from the tubular resin absorbent material. Therefore, the pipe-lining material can block light in a reliable fashion, and thereby prevent the photo-curing resin impregnated in the tubular resin absorbent material from curing by accidental exposure to external light.

Since only one layer of shading film is formed on the exterior surface of the tubular resin absorbent material, the production costs of the pipe-lining material can be reduced.

Furthermore, a shading film can be readily obtained by adding a color pigment to a polyethylene film or other highly airtight plastic film when this film is being produced. Therefore, the conventionally used coating step involving the use of a highly airtight plastic film can be employed as-is, and a pipe-lining material having high shading capability and high airtightness can be produced using simple steps.

Further features of the invention, its nature and various advantages will be more apparent from the accompanying drawings and following detailed description of the invention.
FIG. 1a is a perspective view showing a state in which a shading film is wrapped around a tubular resin absorbent material;
FIG. 1b is a perspective view of a pipe-lining material having a tubular resin absorbent material with a shading film attached thereto;
FIG. 2 is an illustrative view showing a state in which a shading film is thermally fused to a tubular resin absorbent material;
FIG. 3 is an illustrative view showing steps for making a pipe-lining material into a two-layer structure; and
FIG. 4 is a vertically sectional view of a pipe-lining material in which the tubular resin absorbent material is made into a two-layer structure and in which a shading film is thermally fused to the exterior surface thereof.

Embodiments of carrying out the present invention will be described hereinafter with reference to the accompanying drawings.

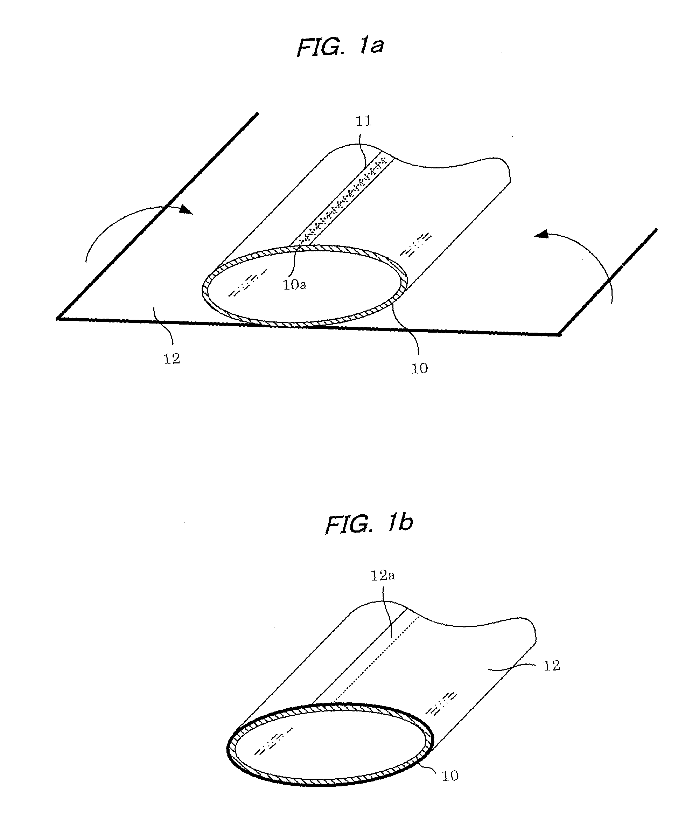

FIG. 1a shows a state in which a flat shading film 12 is wrapped around the exterior surface of a soft tubular resin absorbent material 10 that constitutes part of a pipe-lining material.

The tubular resin absorbent material 10 is manufactured by rounding a resin absorbent strip having a predetermined width and length, abutting and stitching together the two ends 10a of the strip, and affixing a polyurethane, polyethylene, or polypropylene tape 11 to the abutted portion.

The tubular resin absorbent material 10 is composed of a woven fabric, nonwoven fabric, or mat formed using polyamide, polyester, polypropylene, or other plastic fiber; a woven fabric or mat formed using glass fiber; or a nonwoven fabric, woven fabric, or mat formed by combining the plastic fiber and glass fiber.

A strip-shaped shading film 12 as shown in FIG. 1a is wrapped around the exterior surface of the soft tubular resin absorbent material 10. The shading film can be manufactured by adding a quinophthalone- or isoindolinone-based organic pigment to a polyethylene, polypropylene, nylon, vinyl chloride, or other plastic film so as to be able to block UV rays, visible light, or the like.

The shading film 12 is closely wrapped around the exterior surface of the tubular resin absorbent material 10 with the two ends 12a thereof overlapped and adhesively bonded together. The tubular resin absorbent material 10 is thus closely covered with the cylindrically shaped shading film 12, as shown in FIG. 1b.

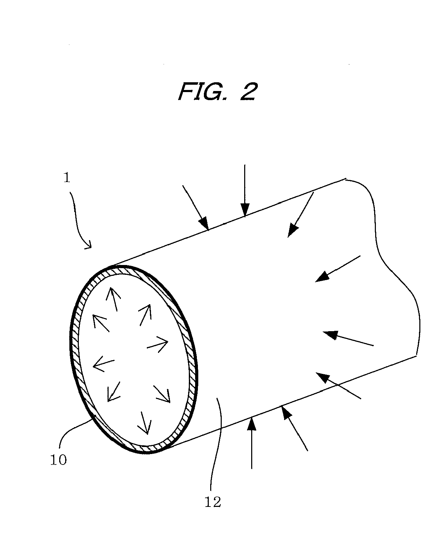

The tubular resin absorbent material 10 covered by the shading film 12 is expanded into a circular shape by supplying compressed air into the interior portion or creating a vacuum in the tubular resin absorbent material, as shown in FIG. 2. Although not shown in FIG. 2, a cylindrical inner liner is inserted inside in actual practice, and the shading film and the tubular resin absorbent material are expanded into a circular shape via this inner liner. The shading film 12, the tubular resin absorbent material 10, and the inner liner (not shown) are passed through an oven (not shown) while expanded into a circular shape, and are heated from all sides during the passage, as shown by the arrows. The shading film 12 is thereby uniformly heat-fused and bonded to the entire exterior surface in the pipe length direction of the tubular resin absorbent material 10.

Once the shading film 12 is thus thermally fused to the exterior surface of the tubular resin absorbent material 10, the pressure exerted in the interior is released. This causes the tubular resin absorbent material 10 and the shading film 12 to contract. The inner liner is then removed from the interior to provide a pipe-lining material 1 having an overall flattened shape.

The tubular resin absorbent material 10 with the shading film 12 heat-fused thereto is impregnated with an uncured liquid photo-curing resin by a known method. The photo-curing resin may be obtained by adding a photocatalyst to an unsaturated polyester resin, vinyl ester resin, epoxy resin, or other curable liquid resin, for example.

The tubular resin absorbent material 10 can be impregnated with a liquid thermosetting resin in addition to a photo-curing resin. Such a thermosetting resin may be obtained by adding a thermal catalyst to an unsaturated polyester resin, vinyl ester resin, epoxy resin, or other curable liquid resin.

When the tubular resin absorbent material is impregnated with a thermosetting resin and a photo-curing resin, the photo-curing resin is impregnated so as to be disposed on the internal peripheral surface of the pipe-lining material or the tubular resin absorbent material, and the thermosetting resin is impregnated so as to be disposed on the external peripheral surface thereof.

In this embodiment, the external peripheral surface of the pipe-lining material or the tubular resin absorbent material means a surface facing the internal peripheral surface of the pipeline in a state in which the pipe-lining material is inserted into a pipeline and prepared for curing.

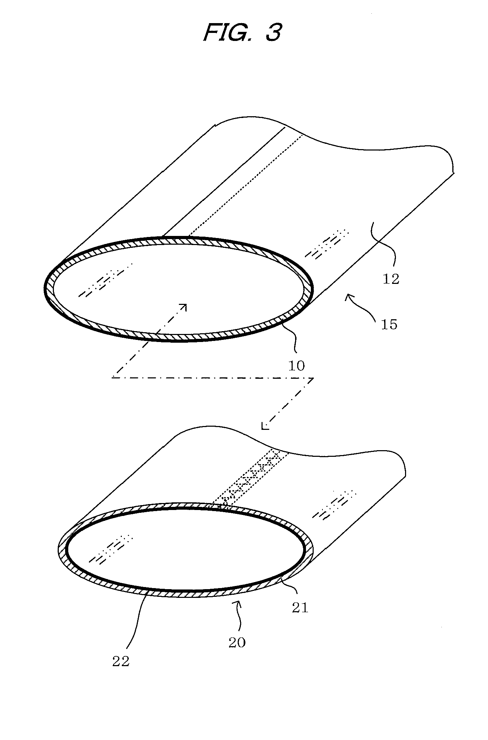

FIG. 3 shows another embodiment in which an inner lining material 20 is inserted into the above-mentioned tubular resin absorbent material 10 to form the tubular resin absorbent material into a two-layer structure. In this case, the tubular resin absorbent material 10 with the thermally fused shading film 12 serves as an outer lining material 15.

The inner lining material 20 comprises a soft tubular resin absorbent material 21 whose density is higher than that of the resin absorbent material 10 of the outer lining material 15. This improves the watertightness of the pipe-lining material. For example, a needle-punched nonwoven fabric composed of polyester or other plastic fibers is used for the resin absorbent material 10 of the outer lining material 15, and a resin-absorbent material having the same characteristics as the resin-absorbent material 10 is compressed and needle-punched to manufacture a resin absorbent material whose density is higher than that of the resin-absorbent material 10. Alternatively, a nonwoven fabric composed of spunbonded plastic fibers can be used for the resin absorbent material 10, and a heavy, spunbonded nonwoven fabric having the same characteristics and a greater mass per area can be used for the resin absorbent material 21, making it possible to obtain a resin absorbent material whose density is higher than that of the resin-absorbent material 10.

The tubular resin absorbent material 21 of the inner lining material 20 is manufactured by rounding a resin absorbent strip of a predetermined width and length, and abutting and stitching together the two ends of the strip, as is in the same manner as the resin-absorbent material 10 of the outer lining material 15.

An inner tube 22 composed of a polyethylene, polypropylene, nylon, vinyl chloride, or other plastic film is peelably affixed to the internal peripheral surface of the tubular resin absorbent material 21 to protect the internal surface thereof. Since the inner tube 22 is peelable, the tube can be peeled off from the pipe-lining material and removed to the outside after the pipeline is rehabilitated.

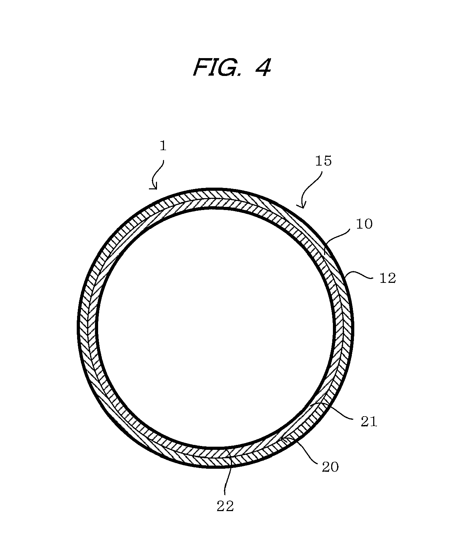

The inner lining material 20 is inserted into the outer lining material 15 by eversion or pulling to manufacture the pipe-lining material 1 comprising the two-layer structure of the outer lining material 15 and the inner lining material 20. The cross-sectional structure of the pipe-lining material 1 thus fabricated is shown in FIG. 4.

The tubular resin absorbent material 10 of the outer lining material 15 and the tubular resin absorbent material 21 of the inner lining material 20 are impregnated with a photo-curing resin, or with a photo-curing resin and a thermosetting resin by a known method. The respective characteristics of the photo-curing resin and the thermosetting resin that are impregnated in the tubular resin absorbent material 21 are the same as those of the photo-curing resin and thermosetting resin that are impregnated in the tubular resin absorbent material 10.

The pipe-lining material 1 is inserted into an existing pipeline by pulling. At this time, the shading film 12 is disposed on the external peripheral surface of the pipe-lining material 1, as shown in FIG. 1b and FIG. 3 (FIG. 4). The pipe-lining material 1 is expanded into a circular shape by supplying compressed air in the pipeline to bring the shading film 12 into contact with the internal peripheral surface of the pipeline (not shown). In this state, the pipe-lining material is exposed to light from the inside by irradiation to cure the photo-curing resin or the thermosetting resin impregnated in the tubular resin absorbent material. The internal peripheral surface of the pipeline is thus rehabilitated with the pipe-lining material.

Irrespective of whether a one-layer structure or a two-layer structure is used, the entire external surface of the tubular resin absorbent material in the pipe-lining material 1 is covered with a shading film, preventing the photo-curing resin impregnated in the tubular resin absorbent material from being accidentally exposed to and cured with external light, and the shading film from deviating in position relative to the tubular resin absorbent material.

Furthermore, a shading film can easily be obtained by adding a color pigment to a polyethylene film or other highly airtight plastic film when this plastic film is being produced. Therefore, the conventionally used coating step involving the use of a plastic film can be directly used, and a pipe-lining material having high shading capability and high airtightness can be produced using simple steps.

## Claims

1. A pipe-lining material (1) that is inserted into a pipeline to rehabilitate an inner peripheral surface thereof, the pipe-lining material comprising:
a tubular resin absorbent material (10) impregnated with a curable resin; and
a tubular shading film (12) that is thermally fused and bonded to the exterior surface of the tubular resin absorbent material (10).

2. A pipe-lining material according to claim 1, wherein the curable resin is a photo-curing resin, or a photo-curing resin mixed with a thermosetting resin.

3. A pipe-lining material according to claim 1 or 2, wherein an inner lining material (20) having a tubular resin absorbent material (21) impregnated with a curable resin is brought into close contact with the inner peripheral surface of the tubular resin absorbent material (10).

4. A pipe-lining material according to claim 3, wherein the density of the resin absorbent material (21) is greater than the density of the resin absorbent material (10).

5. A pipe-lining material according to claim 3 or 4, wherein the curable resin impregnated in the tubular resin absorbent material (21) is a photo-curing resin, or a photo-curing resin mixed with a thermosetting resin.

6. A pipe-lining material according to one of claims 1 to 5, wherein the shading film (12) is manufactured using a polyethylene, polypropylene, nylon, vinyl chloride, or other plastic film with an organic pigment added thereto.
